# EUROPEAN PATENT APPLICATION

(11) **EP 4 821 907 A1**
(43) Date of publication of application: **14.10.2026**
(21) Application number: 25744870.4
(22) Date of filing: 10.01.2025
(51) Int. Cl.: C04B 35/56, B23B 27/14, C01G 41/00, C22C 29/08

(54) **POWDER COMPRISING TUNGSTEN CARBIDE**

(30) Priority: 25.01.2024 JP 2024009528
(71) Applicant: A.L.M.T. Corp., Tokyo 104-0061 (JP)
(72) Inventor: NISHIDE, Yuto, Toyama-shi, Toyama 931-8543 (JP)
(74) Representative: Prüfer & Partner mbB Patentanwälte · Rechtsanwälte
(86) International application number: PCT/JP2025/000642
(87) International publication number: WO 2025/158938

(57) **Abstract**

Powder containing tungsten carbide and having an average particle size of 3.0 µm or more and 10.0 µm or less as measured by an FSSS method is provided, and a degree of single crystallinity is 0.50 or more and 0.70 or less.

## Description

### TECHNICAL FIELD

The present disclosure relates to powder containing tungsten carbide. The present application claims priority based on Japanese Patent Application No. 2024-009528 filed on January 25, 2024. The entire contents of the Japanese Patent Application are incorporated herein by reference.

### BACKGROUND ART

Conventionally, powder containing tungsten carbide is disclosed, for example, in Japanese Patent Laying-Open No. H08-117580 (PTL 1) and Japanese Patent Laying-Open No. 2013-60666 (PTL 2).

### CITATION LIST

### PATENT LITERATURE

PTL 1: Japanese Patent Laying-Open No. H08-117580
PTL 2: Japanese Patent Laying-Open No. 2013-60666

### SUMMARY OF INVENTION

Powder containing tungsten carbide of the present disclosure is powder containing tungsten carbide and having an average particle size of 3.0 µm or more and 10.0 µm or less as measured by a Fisher sub-sieve sizer (FSSS) method, and a degree of single crystallinity is 0.50 or more and 0.70 or less.

### BRIEF DESCRIPTION OF DRAWINGS

[Fig. 1] Fig. 1 is a flowchart showing a method of manufacturing powder containing tungsten carbide according to the present disclosure.
[Fig. 2] Fig. 2 is a diagram of powder 201 containing crystals 202, shown for illustrating a degree of single crystallinity.
[Fig. 3] Fig. 3 is a graph showing a relation between an FSSS average particle size and a degree of single crystallinity of each powder containing tungsten carbide and manufactured by each of various manufacturing methods.
[Fig. 4] Fig. 4 is a graph showing a definition of a full width at half maximum.
[Fig. 5] Fig. 5 is a diagram showing an XRD diffraction pattern of powder containing tungsten carbide.
[Fig. 6] Fig. 6 is a graph showing a relation between an FSSS average particle size and a crystallite size of each powder containing tungsten carbide and manufactured by each of various manufacturing methods.
[Fig. 7] Fig. 7 is a photograph showing voids in cemented carbide that occur after the cemented carbide is manufactured by sintering.
[Fig. 8] Fig. 8 is a graph showing a relation between a mixing time and a void area ratio during manufacturing of cemented carbide.
[Fig. 9] Fig. 9 is a graph showing a relation between: an average particle size of powder containing coarse-grained tungsten carbide as a raw material in a case of a mixing time of 3 hours; and a void area ratio of cemented carbide of the powder.
[Fig. 10] Fig. 10 is a graph showing a relation between: an average particle size of powder containing fine-grained tungsten carbide as a raw material in a case of a mixing time of 8 hours; and a void area ratio of cemented carbide of the powder.

### DESCRIPTION OF EMBODIMENTS

### [Problem to be Solved by the Present Disclosure]

There has been a demand for powder containing tungsten carbide, which enhances uniformity of a cemented carbide structure and is excellent in mixability.

### [Description of Embodiments of the Present Disclosure]

First, embodiments of the present disclosure will be listed and described.

### (Summary of Powder Containing Tungsten Carbide)

The present application provides tungsten carbide powder that has few grain boundaries and is resistant to crushing, and that can be dispersed in a short time in a mixing process for producing cemented carbide and allows production of cemented carbide having a uniform cemented carbide structure.

Since WC-based cemented carbide has high hardness and exhibits excellent wear resistance, it has conventionally been widely used for various cutting tools, jigs and tools, mechanical components, and the like. In recent years, cutting tools made of WC-based cemented carbide have been increasingly required to exhibit higher wear resistance and chipping resistance.

Further, for cemented carbide as a mold, dimensional accuracy requirements are also becoming increasingly stringent.

In order to improve the above-mentioned requirements, it is important to achieve uniformization of a cemented carbide structure.

Various refinements and improvements have been made in a mixing process and a sintering process, which are processes of producing cemented carbide. As measures taken, for example, in the case of attritor mixing, powder containing tungsten carbide is crushed during mixing to thereby promote uniformization of the powder particle size and also uniformization of the cemented carbide structure.

On the other hand, crushing of raw materials themselves leads to time-consuming dispersion, which causes problems such as a decrease in productivity due to a prolonged mixing time, and coarsening/agglomeration of cobalt powder due to long-time mixing and crushing.

Crushing of powder containing tungsten carbide during mixing basically occurs at grain boundaries existing in powder containing tungsten carbide. Powder, which contains particles each having a large number of crystalline bodies, is crushed starting from grain boundaries between the crystalline bodies during mixing. In other words, powder having more grain boundaries requires more time for crushing and uniformization, with the result that the above-described problems are more likely to occur. Thus, mixability is enhanced by reducing grain boundaries.

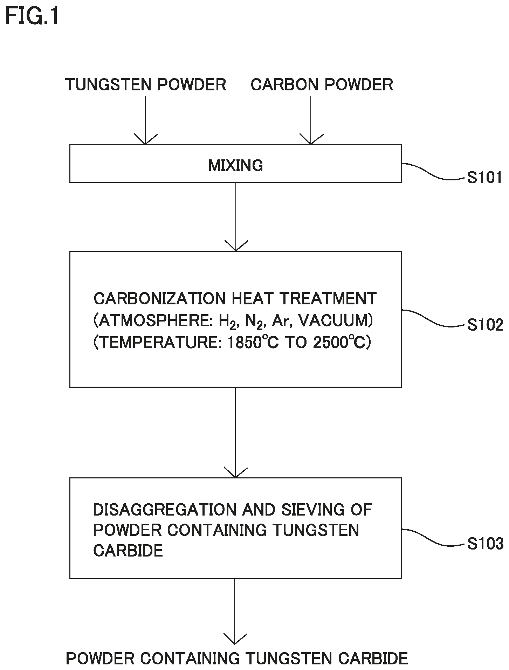

Fig. 1 is a flowchart showing a method of manufacturing powder containing tungsten carbide according to the present disclosure.

As shown in Fig. 1, according to step S101, tungsten powder having an average particle size (an FSSS average particle size) of 0.3 µm to 10.0 µm as measured by an FSSS method and carbon powder having an FSSS average particle size of 1.0 µm were prepared. These powders were mixed for 10 minutes at a rotation speed of 500 rpm using a general mixer having stirring blades such that a mass blending ratio was 93.8:6.2.

According to step 102, a mixture was placed on a carbon tray to have a thickness of 20 mm. Heat treatment was performed at 1850°C to 2500°C for 30 minutes to 480 minutes in an atmosphere of hydrogen, nitrogen, argon, or vacuum. Thereby, powder containing tungsten carbide was manufactured. The particle size of the obtained powder containing tungsten carbide varies depending on the size of the raw material.

According to step 103, the powder containing tungsten carbide was disaggregated using a ball mill with media of ϕ20 mm in size. Finally, the resultant was mixed for 30 minutes in a free-fall mixer to obtain tungsten carbide powder with uniform particle size.

Powder containing tungsten carbide according to the present disclosure should only contain 95 mass% or more of tungsten carbide in a mass ratio.

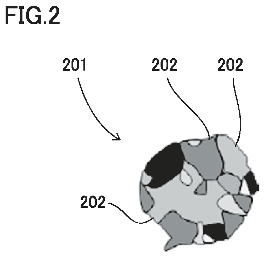

As shown in Fig. 2, powder 201 is an aggregate of crystals 202. For powder containing tungsten carbide and having an FSSS average particle size of 3.0 µm or more, a degree of single crystallinity is defined by the following expression. 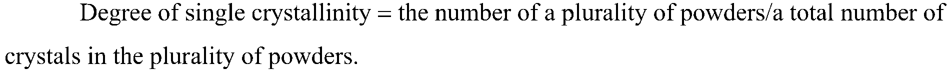 Degree of single crystallinity = the number of a plurality of powders/a total number of crystals in the plurality of powders.

Powder containing tungsten carbide according to one aspect of the present disclosure is powder containing tungsten carbide and having an average particle size of 3.0 µm or more and 10.0 µm or less as measured by the FSSS method, and a degree of single crystallinity is 0.50 or more and 0.70 or less.

As the degree of single crystallinity is higher, uniformity is achieved faster during mixing in producing cemented carbide, and therefore, the degree of single crystallinity is more preferably 0.57 or more and 0.70 or less.

Powder containing tungsten carbide according to another aspect of the present disclosure is powder containing tungsten carbide and having an average particle size of 0.50 µm or more and 3.0 µm or less as measured by the FSSS method, and, when X represents the average particle size of the powder containing tungsten carbide and Y represents a crystallite size of the powder containing tungsten, X and Y satisfy that 20X + 40 ≤ 1000•Y ≤ 20X + 80. In this case, 1000•Y represents a value that is 1000 times as large as Y. The same applies hereinafter.

As the crystallite size is larger relative to the particle size of the powder, uniformity is achieved faster during mixing in producing cemented carbide, and therefore, X and Y preferably satisfy that 20X + 50 ≤ 1000•Y ≤ 20X + 80.

### [Details of Embodiments of the Present Disclosure]

### (Powder Containing Tungsten Carbide According to First Manufacturing Method)

In the first manufacturing method of manufacturing powder containing tungsten carbide, tungsten and carbon are mixed and then heated in a furnace under a vacuum atmosphere to undergo carbonization treatment. At this time, by conducting control at an optimum carbonization temperature suited for the tungsten powder particle size, powder containing tungsten carbide having an appropriate particle size and a high degree of single crystallinity can be obtained.

Tungsten powder having an average particle size of 0.3 µm to 10.0 µm as measured by the Fisher sub-sieve sizer (FSSS) method and carbon powder having an average particle size of about 1.0 µm are employed and mixed for about 10 minutes at a rotation speed of 500 rpm using a general mixer having stirring blades. At this time, a mass blending ratio is set such that tungsten powder: carbon powder = 93.8:6.2. As to a mixing method, any type of mixer may be used as long as uniform mixing is achieved.

For the Fsss average particle size, Fisher Sub-Sieve Sizer Model 95 manufactured by Fisher Scientific is used.

The mixture is placed on a carbon tray to have a thickness of 20 mm and subjected to heat treatment at 1850°C to 2500°C for 30 minutes to 480 minutes in an atmosphere of hydrogen, nitrogen, argon, or vacuum, to thereby carbonize tungsten. Thus, powder containing tungsten carbide is manufactured.

Then, the powder is disaggregated using a ball mill with media of ϕ20 mm in size, and lastly mixed for 30 minutes in a free-fall mixer to uniformize the particle size of powder containing tungsten carbide, and thus, powder containing tungsten carbide is produced.

A proportion of carbon (both free carbon not bonded to tungsten and carbon bonded to tungsten) in the powder containing tungsten carbide is measured, for example, by examining the amount of carbon using a carbon meter (WC230) manufactured by LECO Corporation. The proportion of tungsten carbide can be obtained by calculation from a relational expression "100 - (content of oxygen + content of inevitable impurities + content of free carbon)".

The content of oxygen can be measured, for example, according to an "infrared absorption method" in 13.4 in JIS H 1403 (2001) using a TC-600 type oxygen/nitrogen analyzer manufactured by LECO Corporation.

Inevitable impurities are impurities inevitably mixed into powder containing tungsten carbide from at least one of a raw material and an apparatus during a manufacturing process, and are specifically aluminum, calcium, copper, magnesium, manganese, silicon, and tin. The content of the free carbon amount can be measured, for example, by examining, with a carbon meter (WC230) manufactured by LECO Corporation, a collection of insoluble matter generated when powder containing tungsten carbide is dissolved in a mixed acid consisting of nitric acid and phosphoric acid.

For the produced powder, the blending ratio of the raw materials was adjusted such that the content of free carbon was 0.2 mass% or less. Further, using an ICPS-8100CL model which is an Inductively Coupled Plasma (ICP) manufactured by Shimadzu Corporation, it was confirmed that the content of the above-mentioned inevitable impurities in each prepared powder was 10 ppm or less in each of aluminum, copper, magnesium, and manganese, and 20 ppm or less in each of calcium, silicon, and tin. In other words, a total content of the above-mentioned inevitable impurities was 100 ppm or less. As long as the inevitable impurities do not have such a size as to be regarded as foreign matter in an alloy structure, but when the content of the inevitable impurities is within the above-mentioned range, sound cemented carbide can be obtained.

Then, an FSSS average particle size of the obtained powder containing tungsten carbide was measured. Table 1 shows samples each having an FSSS average particle size of 3.0 µm or more. Table 2 shows samples each having an FSSS average particle size of less than 3.0 µm.

**[Table 1]**

| Table 1/ Sample No. | FSSS Average Particle Size | Degree of Single Crystallinity | Void Area Ratio 3 Hours |
|---|---|---|---|
| | µm | | % |
| 1 | 3.1 | 0.52 | 0.6 |
| 2 | 4.6 | 0.50 | 0.5 |
| 3 | 6.0 | 0.63 | 0.5 |
| 4 | 8.1 | 0.57 | 0.5 |
| 5 | 10.0 | 0.70 | 0.4 |
| 11 | 3.0 | 0.18 | 1.5 |
| 12 | 3.4 | 0.03 | 1.8 |
| 13 | 4.0 | 0.09 | 1.7 |
| 14 | 4.5 | 0.08 | 1.9 |
| 15 | 5.0 | 0.09 | 1.4 |
| 16 | 5.6 | 0.11 | 1.5 |
| 17 | 6.1 | 0.06 | 1.5 |
| 18 | 6.5 | 0.03 | 1.5 |
| 19 | 3.4 | 0.35 | 1.3 |
| 20 | 3.9 | 0.32 | 1.1 |
| 21 | 4.5 | 0.33 | 1.3 |
| 22 | 5.0 | 0.29 | 1.2 |
| 23 | 6.0 | 0.40 | 1.3 |
| 24 | 7.1 | 0.37 | 1.2 |
| 25 | 8.1 | 0.32 | 0.9 |
| 26 | 9.0 | 0.39 | 1.0 |
| 27 | 10.1 | 0.25 | 0.8 |

**[Table 2]**

| Table 2/ Sample No. | FSSS Average Particle Size X | Full Width at Half Maximum | Crystallite Size Y | Void Area Ratio 8 Hours |
|---|---|---|---|---|
| | µm | Degree | nm | % |
| 31 | 0.51 | 0.213 | 50.3 | 0.9 |
| 32 | 0.65 | 0.193 | 55.5 | 0.9 |
| 33 | 0.70 | 0.170 | 62.9 | 0.7 |
| 34 | 0.98 | 0.171 | 62.4 | 0.8 |
| 35 | 1.0 | 0.137 | 78.4 | 0.5 |
| 36 | 1.3 | 0.106 | 100.7 | 0.2 |
| 37 | 1.4 | 0.138 | 77.6 | 0.3 |
| 38 | 1.6 | 0.126 | 84.8 | 0.2 |
| 39 | 1.9 | 0.119 | 90.1 | 0.2 |
| 40 | 2.6 | 0.107 | 99.8 | 0.1 |
| 41 | 3.0 | 0.094 | 113.8 | 0.1 |
| 51 | 0.47 | 0.316 | 33.9 | 2.0 |
| 52 | 0.62 | 0.238 | 44.9 | 1.4 |
| 53 | 0.67 | 0.280 | 38.2 | 1.5 |
| 54 | 0.87 | 0.220 | 48.6 | 1.1 |
| 55 | 1.3 | 0.199 | 53.5 | 1.2 |
| 56 | 1.6 | 0.202 | 52.9 | 0.9 |
| 57 | 2.1 | 0.183 | 58.4 | 1.0 |
| 58 | 2.4 | 0.169 | 63.4 | 0.7 |
| 59 | 3.0 | 0.144 | 74.2 | 0.8 |

Each of Sample Nos. 1 to 5 in Table 1 is powder containing tungsten carbide and manufactured by the first manufacturing method.

Each of Sample Nos. 31 to 41 in Table 2 is powder containing tungsten carbide and manufactured by the first manufacturing method.

### (Powder Containing Tungsten Carbide According to Second Manufacturing Method)

In the second manufacturing method, a mixture is manufactured in the same procedure as that in the first manufacturing method.

Powder containing tungsten carbide is placed as a mixture on a carbon tray to have a thickness of 20 mm and subjected to heat treatment at 1000°C to 1800°C for 30 minutes to 480 minutes in an atmosphere of hydrogen, nitrogen, argon, or vacuum, to thereby carbonize tungsten. Thus, powder containing tungsten carbide is manufactured.

In the second manufacturing method, the particle size of the powder containing tungsten carbide is made uniform in the same procedure as that in the first manufacturing method. Tungsten carbide according to the second manufacturing method has the same composition as that of the powder containing tungsten carbide and manufactured by the first manufacturing method.

Then, the FSSS average particle size of the obtained powder containing tungsten was measured. Table 1 shows samples each having an FSSS average particle size of 3.0 µm or more. Table 2 shows samples each having an FSSS average particle size of less than 3.0 µm.

Each of Sample Nos. 11 to 27 in Table 1 is powder containing tungsten carbide and manufactured by the second manufacturing method.

Each of Sample Nos. 51 to 59 in Table 2 is powder containing tungsten carbide and manufactured by the second manufacturing method.

### (Method of Measuring Crystallinity of Powder Containing Tungsten Carbide and Having FSSS Average Particle Size of 3.0 µm or More)

A scanning electron microscope (SEM) is used for crystallinity analysis of powder containing tungsten carbide and having an FSSS average particle size of 3.0 µm or more. First, a sample of powder containing tungsten carbide to be measured is embedded in a resin such as an epoxy resin. By embedment in a resin, a powder plane can be polished cleanly. The resin and the embedding method used herein may be another resin or method as long as the sample is fixed.

The resin-embedded sample is subjected to rough polishing with sandpaper No. 80 to sandpaper No. 2000, and then subjected to finish-polishing with diamond abrasive grains or the like. If the sample comes off from the resin during this polishing, finishing is lastly performed by ion milling.

For each of 100 or more particles, a cross section of the polished powder containing tungsten carbide is observed with the SEM at a magnification of 3000 times. Thereby, the number of crystals contained in one particle is measured. Crystallinity is defined in terms of the degree of single crystallinity by the following mathematical expression. 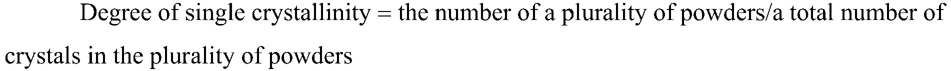 Degree of single crystallinity = the number of a plurality of powders/a total number of crystals in the plurality of powders

Table 1 shows the degree of single crystallinity of the powder containing tungsten carbide and corresponding to each of Sample Nos. 1 to 5 and 11 to 27.

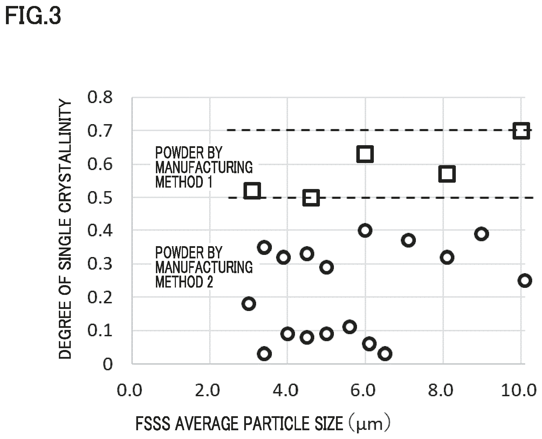

Fig. 3 is a graph showing a relation between an FSSS average particle size and a degree of single crystallinity of each powder containing tungsten carbide and manufactured by each of various manufacturing methods.

As shown in Table 1 and Fig. 3, it can be seen that the powder containing tungsten carbide, corresponding to each of Sample Nos. 1 to 5 and manufactured by the first manufacturing method has a degree of single crystallinity of 0.5 or more and 0.7 or less.

On the other hand, it can be seen that the powder containing tungsten carbide, corresponding to each of Sample Nos. 11 to 27 and manufactured by the second manufacturing method has a degree of single crystallinity in a range of 0.03 or more and 0.40 or less.

### (Method of Measuring Crystallinity of Powder Containing Tungsten Carbide and Having FSSS Average Particle Size of 3.0 µm or Less)

An X-ray diffractometer (XRD) is used for crystallinity analysis for the FSSS average particle size of 0.50 µm or more and 3.0 µm or less. A full width at half maximum at a peak value 2θ(°) = 84° in data of a reference code 00-025-1047 of tungsten carbide in the International Centre for Diffraction Data (ICDD) is measured.

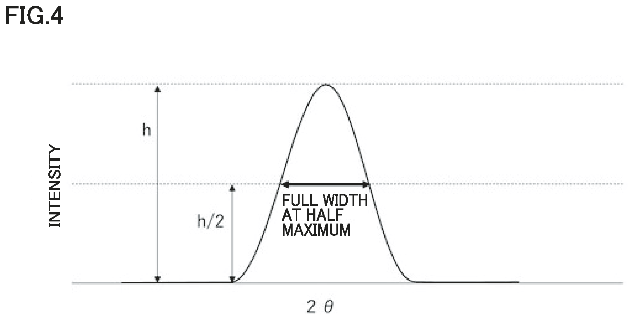

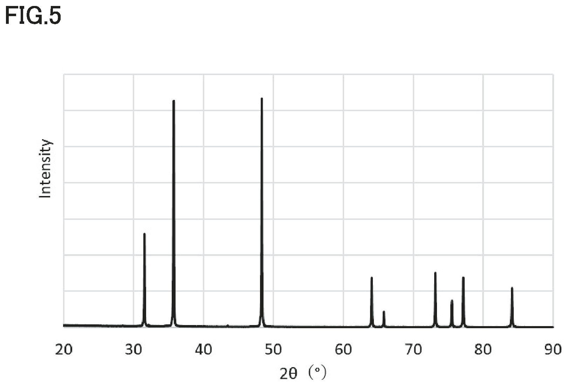

Fig. 4 is a graph showing a definition of a full width at half maximum. Fig. 5 is a diagram showing an XRD diffraction pattern of powder containing tungsten carbide. Figs. 4 and 5 allows estimation of the size of each crystal included in powder containing tungsten carbide (Fig. 3). PANalytical Enpyrean was used as an analyzer, and measurement conditions were set as shown in Table 3.

**[Table 3]**

| Table 3 XRD Analysis Conditions | |
|---|---|
| Tubular Bulb | Cu |
| Output | 45kV - 40mA |
| Incident Optical System | Solar Slits (0.04°), Divergence Slits (0.5°) |
| | Mask (15 mm), Anti-Scatter Slits (1°) |
| Light-Receiving Optical System | Anti-Scatter Slits (8 mm), Solar Slits (0.04°) |
| | Ni Filter, X-Ray Detector |
| Analysis Conditions | Sampling Width: 0.01°, Scanning Speed: 6.5°/min |
| | Wavelength: 1.54056Å, |
| | Diffraction Angle Measurement Range 2θ: 20° to 90° |

The crystallinity evaluation is quantified as a crystallite size Y, and calculation thereof is expressed using the following Scherrer equation.$Y = 0.9 \times 1.541 \times 57.3 / \left(full width at half maximum\times 0.743\times 10000\right)$

The unit of the full width at half maximum is a degree. In the above-mentioned equation, the unit of Y is (µm).

Based on Table 2, as a result of comparison of the crystallite sizes of powders containing tungsten carbide and manufactured by Manufacturing Method 1 or 2, in the case of each powder containing tungsten carbide and having a similar level of the FSSS particle size, the powder by Manufacturing Method 1 is larger in terms of crystallite size than the powder by Manufacturing Method 2.

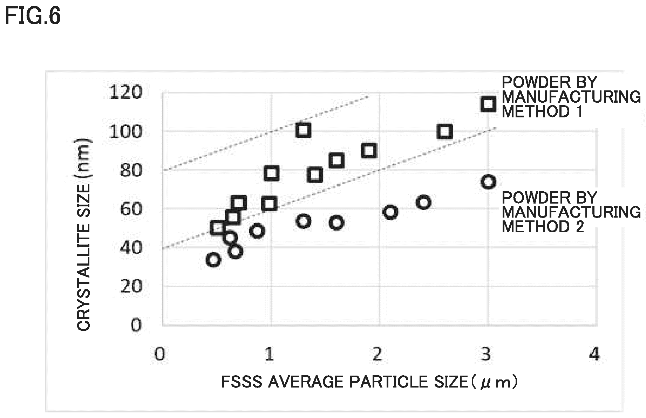

Fig. 6 is a graph showing a relation between an FSSS average particle size and a degree of single crystallinity of each powder containing tungsten carbide and manufactured by each of various manufacturing methods. The relation between the FSSS particle size (X) and the crystallite size (Y) of the powder containing tungsten carbide by Manufacturing Method 1 was 20X + 40 ≤ 1000•Y ≤ 20X + 80 (Fig. 6).

### (Void Area Ratio of Cemented Carbide)

Then, 10 mass% of Co powder was blended into each powder containing tungsten carbide and manufactured by each of manufacturing methods 1 and 2, and mixed for 3 hours to 8 hours with an attritor. Various mixtures obtained in a mixing time of 3 hours to 8 hours were press-molded at a pressure of 98 MPa. A molded material was sintered at 1380°C for 1 hour in vacuum. The dimensions of cemented carbide were 4 mm × 8 mm × 25 mm, and an area ratio of void(s) was obtained by structure observation.

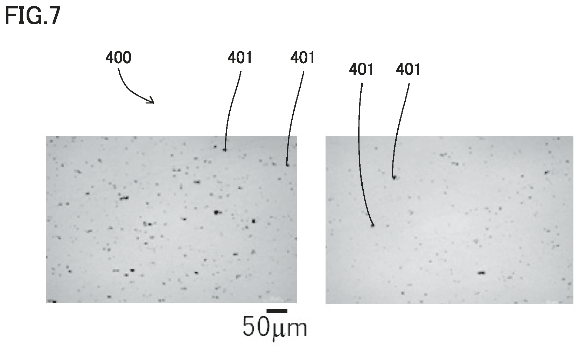

Fig. 7 is a photograph showing voids in cemented carbide that occur after the cemented carbide is manufactured by sintering. For the measurement of an area ratio of voids 401 on a surface 400 of the cemented carbide, the surface of the cemented carbide is photographed at three or more locations with an optical microscope at a magnification of 100 times. The area ratio of the void(s) (area of void(s)/700 µm × 530 µm) is calculated in a range of each area 700 µm × 530 µm (2048 pixels × 1536 pixels), and an average value thereof is calculated and defined as an area ratio of void(s) on the surface of the cemented carbide.

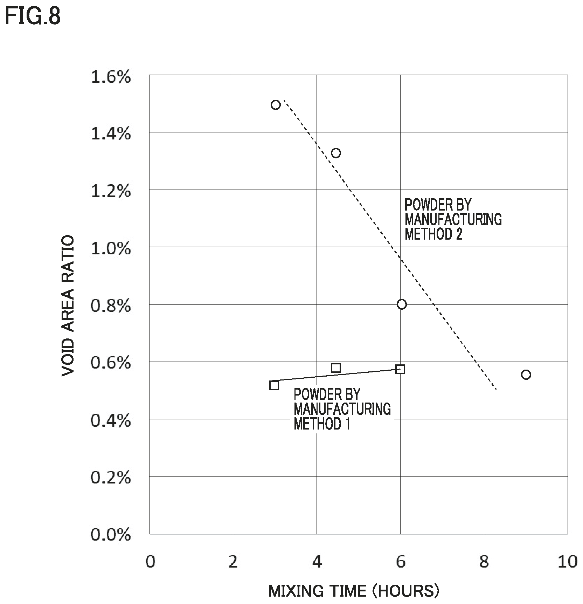

Fig. 8 is a graph showing a relation between a mixing time and a void area ratio during manufacturing of cemented carbide.

Regarding the void area ratio of cemented carbide produced using, as a raw material, powder containing tungsten carbide and having an FSSS average particle size of 3 µm as shown in Fig. 8, it was found that the area ratio of void(s) in the case of the degree of single crystallinity exceeding 0.50 becomes stable in a shorter mixing time than that in the case of Manufacturing Method 2. This has an effect of enhancing the productivity in the mixing process.

Further, for each powder containing each of all types of tungsten in Tables 1 and 2 in mixing times of 3 hours and 8 hours, cemented carbide was produced and evaluated.

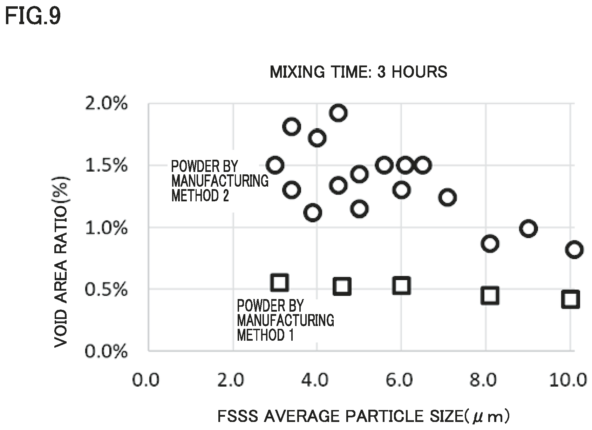

Fig. 9 is a graph showing a relation between: an average particle size of powder containing coarse-grained tungsten carbide as a raw material in the case of the mixing time of 3 hours; and a void area ratio of cemented carbide of the powder.

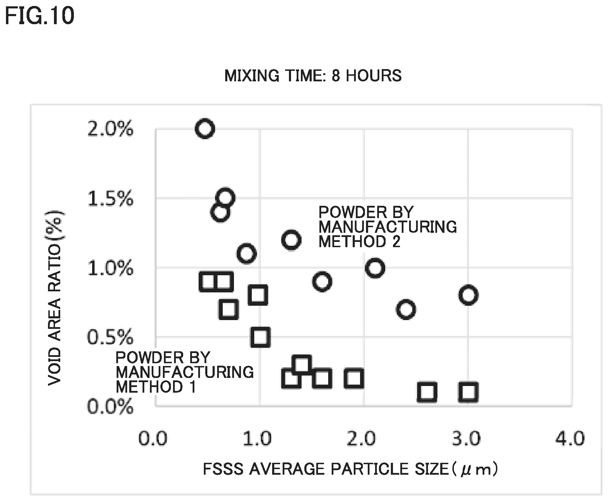

Fig. 10 is a graph showing a relation between: an average particle size of powder containing fine-grained tungsten carbide as a raw material in the case of the mixing time of 8 hours; and a void area ratio of cemented carbide of the powder.

As shown in Figs. 9 and 10, it was confirmed that production of cemented carbide from powder containing tungsten carbide and manufactured by Manufacturing Method 1 leads to excellent mixability, so that the void area ratio can be reduced.

It should be understood that the embodiments disclosed herein are illustrative and non-restrictive in every respect. The scope of the present invention is defined by the terms of the claims, rather than the embodiments described above, and is intended to include any modifications within the scope and meaning equivalent to the terms of the claims.

### REFERENCE SIGNS LIST

201 powder containing tungsten carbide, 202 crystal, 400 surface of cemented carbide, 401 void.

## Claims

1. Powder containing tungsten carbide and having an average particle size of 3.0 µm or more and 10.0 µm or less as measured by an FSSS method, wherein
a degree of single crystallinity is 0.50 or more and 0.70 or less.

2. Powder containing tungsten carbide and having an average particle size of 0.50 µm or more and 3.0 µm or less as measured by an FSSS method, wherein
when X represents the average particle size of the powder containing tungsten carbide and Y represents a crystallite size of the powder containing tungsten carbide, the X and the Y satisfy that 20X + 40 ≤ 1000•Y ≤ 20X + 80.
